# EUROPEAN PATENT SPECIFICATION

(11) **EP 0 528 067 B1**
(45) Date of publication and mention of the grant of the patent: **31.05.1995**
(21) Application number: 91113908.7
(22) Date of filing: 20.08.1991
(51) Int. Cl.: B04B 1/20, B01D 17/038, B01D 21/26

(54) **Sedimentation centrifuge**
Sedimentationszentrifuge
Centrifugeur à sédimentation

(43) Date of publication of application: 24.02.1993
(73) Proprietor: KOTOBUKI TECHREX, LTD., Kawasaki-shi Kanagawa-ken (JP)
(72) Inventor: Suzuki, Souroku, Mobara-shi, Chiba-ken (JP)
(74) Representative: Klingseisen, Franz, Dipl.-Ing.

(56) References cited:
- EP-A- 0 228 188
- DE-C- 1 279 551
- GB-A- 778 574
- US-A- 2 057 156
- US-A- 4 335 846

## Description

The present invention relates to a sedimentation centrifuge according to the preamble of claim 1.

Such a sedimentation centrifuge is known from EP-A-0 228 188.

Disk decanters (also called cone-disk decanters) which are in general use for centrifugal sedimentation have a number of spaced conical disks in the form of truncated cones. When a feed slurry of solid-liquid mixture with a large solid content is separated by a disk decanter, however, accumulated solid particles in the mixture tend to clog the gaps between the disks, making the disc decanter fail to operate. To prevent such a problem from happening, it is necessary to reduce the amount of solid particles contained in the mixture with, for example, a screw decanter, and then separate the mixture into solid and liquid phases with a disk decanter. However, this practice requires two expensive decanters connected in series with each other. Furthermore, since the mixture has to be processed under intensive centrifugal force twice, the energy consumed by the decanters is relatively large and wasteful.

The inventor has proposed a sedimentation centrifuge for separating a mixture of solid particles and liquids into solid and liquid phases, and also a sedimentation centrifuge for separating a mixture of solid particles and two liquid phases, i.e., heavy and light liquids, into the solid particles, the heavy liquid, and the light liquid, as disclosed in Japanese Patent No. 1,007,732 (Japanese Patent laid-Open No. 054961/75) and Japanese Patent Laid-Open No. 152556/87 (corresp. to EP-A-0 228 188). The proposed sedimentation centrifuges, which may be termed doubly-canted screw decanters, have a frustoconical bowl for discharging sedimented solid particles. The bowl has an inner wall surface that is canted with respect to the central axis of the bowl first at a larger angle and then at a smaller angle along the direction in which the accumulated solids are discharged. The doubly-canted inner wall surface of the bowl allows the solids to travel smoothly to the end of the bowl and also allows liquid to be removed smoothly from the solid particles. The bowl structure also serves to increase the amount of feed that stays in the centrifuge for an increased period of time. Therefore, the separation accuracy of the centrifuge and the processing capacity of the centrifuge per unit time are increased.

The inventor has found that much remains to be improved in terms of the processing capacity, the separation accuracy, and the amount of required energy in the practical application of the centrifuges. More specifically, as described above, the disk decanter often fails to operate because sedimented solids tend to clog the gaps between the disks particularly when feed has a large solid content. This trouble can only be avoided by first reducing the solid content in the slurry with the screw decanter and then processing the slurry with the disk decanter. Therefore, the two expensive decanters or centrifuges need to be connected in series with each other, resulting in a wasteful consumption of energy as intensive centrifugal forces are required to be applied twice in the decanters. While the doubly-canted screw decanters proposed by the inventor can finish the separating process when the slurry passes through the centrifuge only once, the actual use of the proposed decanters has indicated that the proposed decanters are not so advantageous as expected over the series-connected centrifugal separators and need further improvement with respect to the processing capacity and the energy consumption in applications which demand accurate phase separation.

US-A-2 057 156 describes an apparatus for separating solids from fluid suspension comprising a frustro-conical shell whose large diameter end is closed and whose small diameter end is open. A screw is disposed in this shell which screw comprises widely spaced spiral turns of progressively diminishing radius toward the open end of the centrifuge and barely clearing the centrifuge wall, the spaces in between the spiral turns being occupied by closely spaced spiral turns of progressively diminishing radius but clearing the centrifuge wall by a considerable gap. Both kinds of turns are perpendicular to the axis of the centrifuge or the axis of rotation and function as electrodes which supply electric charge to solids or particles in a mixture.

DE-A 1 279 551 discloses a centrifuge having two frustro-conical portions in which a screw is positioned. A pile of individual, frustro-conical discs is provided in a cylindrical portion between the two frustro-conical portions of the centrifuge.

It is an object of the present invention to provide a sedimentation centrifuge which is free of failures due to clogging caused by a slurry or mixture with a large solid content, can separate a slurry with high separation accuracy, consumes a relatively reduced amount of energy, and can separate a relatively large amount of feed highly reliably in only a single cycle of application of centrifugal forces.

This object is achieved by the features in claim 1.

The bank means referred to in claim 1 may comprise a first bank on an end of the hollow cylindrical body remote from the discharge hole for controlling an overflow of a heavy liquid separated from the solid-liquid mixture, and a second bank on an end of the hollow cylindrical body remote from the discharge hole, for controlling an overflow of a light liquid separated from the solid-liquid mixture. The discharge means may discharge the overflows of heavy and light liquids, respectively. For the purpose of discharging liquids, skimming method is also applicable.

The above and other objects, features, and advantages of the present invention will become apparent from the following description when taken in conjunction with the accompanying drawings which illustrate preferred embodiments of the present invention by way of example.

### BRIEF DESCRIPTION OF THE DRAWINGS

FIG. 1 is a schematic longitudinal cross-sectional view of a sedimentation centrifuge according to the present invention;
FIG. 2 is an enlarged fragmentary longitudinal cross-sectional view of fins and a screw conveyor in the sedimentation centrifuge shown in FIG. 1; and
FIG. 3 is an enlarged fragmentary longitudinal cross-sectional view of fins and a screw conveyor according to another embodiment of the present invention.

### DETAILED DESCRIPTION OF THE PREFERRED EMBODIMENTS

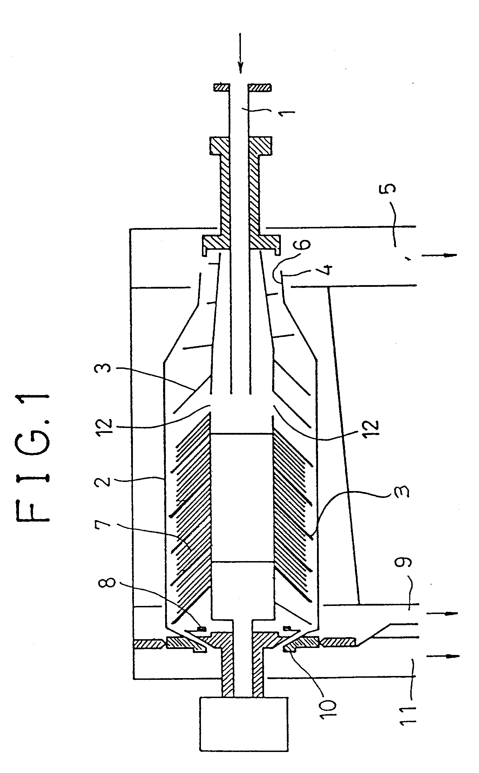

As shown in FIG. 1, the three-phase separator has a supply pipe 1 which extends axially into and is open in a large-diameter cylindrical section of a bowl 2 which comprises a hollow cylindrical body. A feed slurry or solid-liquid mixture to be separated, which is typically composed of solids and heavy and light liquids, is fed through the supply pipe 1 and holes 12 into the bowl 2 while the bowl 2 is rotating at high speed. Solid particles contained in the mixture are displaced radially outwardly toward the inner wall surface of the bowl 2 under centrifugal forces which are generated due to the high-speed rotation of the bowl 2.

The bowl 2 has an open discharge end 4 around the supply pipe 1, the open discharge end 4 defining a discgarge hole. The bowl 2 houses a screw conveyor 3 which is disposed concentrically therein and extends axially between opposite ends of the bowl 2. The solid particles sedimented on the inner wall surface of the bowl 2 are transferred toward the discharge hole by the screw conveyor 3 which rotates at a speed different from the speed at which the bowl 2 is rotating. The solid particles are then discharged from the discharge hole through an outlet passage 5 out of the three-phase separator.

The bowl 2 has a doubly-canted portion disposed partly around one end portion of the screw conveyor 3 which is disposed around the supply pipe 1. The doubly-canted portion includes a first frustoconical section whose inner wall surface is inclined at a larger angle to the central axis of the bowl 2 and which has a larger-diameter open end contiguously joined to one end of the cylindrical section of the bowl 2, and a second frusto-conical section which has a larger-diameter open end contiguously joined to a smaller-diameter open end of the first frustoconical section and whose inner wall surface is inclined at a smaller angle to the central axis of the bowl 2. The larger-diameter open end of the second frustoconical section is positioned at the same level as or below the free liquid surface or the free surface of the solid-liquid mixture which is of a cylindrical shape formed while the bowl 2 is rotating. The opposite open end of the second frustoconical section serves as the discharge end 4.

The second frustoconical section includes a beach 6 disposed near the discharge end 4 and positioned above the level of the mixture in the bowl 2.

Immediately before the sedimented solid particles reach the discharge end 4, the solid particles pass over the beach 6 where remaining liquid is substantially removed from the solids.

The three-phase separator also includes a plurality of helical fins 7 extending parallel to and positioned between the turns of the flight (vane) of the screw conveyor 3, the fins 7 being mounted on the screw conveyor shaft. The fins 7 are inclined with respect to the central axis of the bowl 2, i.e., the free liquid surface of the solid-liquid mixture of cylindrical shape in the bowl 2 during high-speed rotation thereof. A sub stantial portion of the mixture supplied to the separator flows along the flight of the screw conveyor 3 and the fins 7, and hence is subjected to resistance due to the friction therewith. Therefore, the mixture tends to flow in a region near the inner wall surface of the bowl 2 around the screw conveyor 3 and the fins 7. Since the region near the inner wall surface of the bowl 2 is spaced remotely from the axis about which the screw conveyor 3 and the fins 7 rotate, the mixture flowing in the region is subjected to large centrifugal forces, and can be separated highly efficiently.

The three-phase separator may have one or more helical fins and up to 20 helical fins. The distance between the radially outer tips of the fins and the inner wall surface of the bowl 2 ranges from 5 mm to 100 mm, and each of the fins has a thickness in the range of from 0.5 mm to 2 mm.

The distance between the fins should be as small as possible to reduce the distance that the particles of the mixture have to traverse, i.e., the sedimentation distance, resulting in an increase in the efficiency of sedimentation. It the distance between the fins were too small, the gaps between the fins would tend to be clogged by solid particles, preventing solids from being discharged from between the fins. Therefore, the distanvce between the fins should be determined depending on the nature of the solid-liquid mixture to be processed.

If the solid-liquid mixture has a larger solid content, then the distance between the radially outer tips of the fins and the inner wall surface of the bowl 2 should preferably be larger. If the solid-liquid mixture has a smaller solid content, then the distance between the radially outer tips of the fins and the inner wall surface of the bowl 2 should preferably be smaller to give the fins an increased functional surface area for high separation efficiency.

It is therefore preferable that a plurality of screw conveyors with fins of different radial lengths be available, and one of the available screw conveyors be selected depending on the solid content of the solid-liquid mixture to be processed.

Since the centrifuge or the separator according to the present invention is of a doubly-canted decanter configuration, the distance between the free liquid surface of the mixture flowing through the bowl 2 and the inner wall surface of the bowl 2 is large. Therefore, the length of the fins which is inserted in the mixture in the bowl 2 is large for increased separation accuracy and capacity.

The angle by which the fins are inclined to the central axis of the bowl 2, i.e., the screw conveyor shaft, should preferably be small for reduced sedimentation distance and increased separation efficiency. If the angle were too small, however, the gaps between the fins would be clogged by solid particles, and solid particles would not be discharged from between the fins. The angle should preferably be in the range of from 30 to 85 degrees. The surface of the fins may be smooth or may have smooth radial grooves and ridges for an increased surface area that contributes to greater separation capability.

The fins for another embodiment may be in the form of a group of thin plates mounted on the screw conveyor shaft parallel thereto and extending radially outwardly from the screw conveyor shaft obliquely to the free surface of the mixture in the bowl 2 while it is rotating, and the screw conveyor vane may be wound on the outer edges of the thin plates.

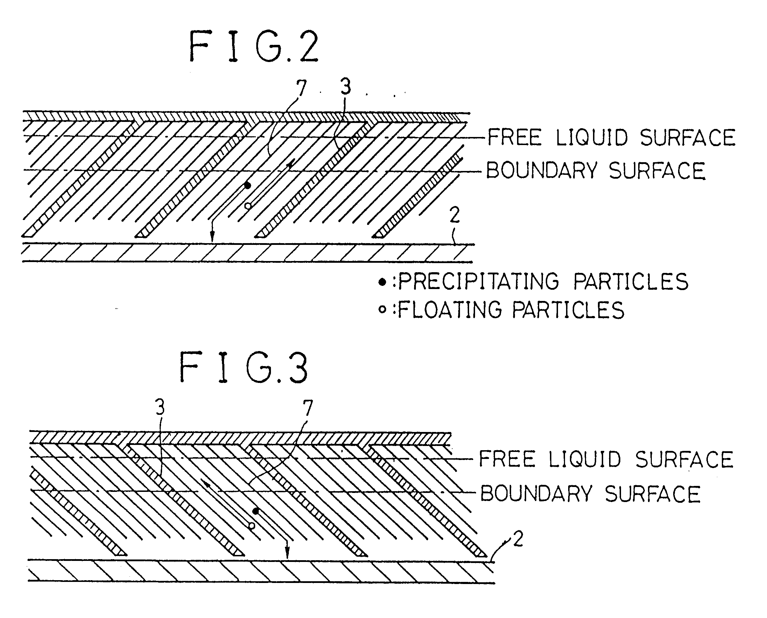

The centrifugal forces applied to the mixture in which the fins 7 are inserted are relatively small. Since, however, the distance between the fins 7 and also between the fins 7 and the screw conveyor vane, i.e., the sedimentation distance, is small, the sedimentation or swimming and subsequent coalescence of heavy and light particles in the mixture, such as precipitating particles and floating particles shown in Fig. 2, are promoted, resulting in increased separation accuracy. Particularly, if the mixture comprises solids and heavy and light liquids, then the heavy and light liquids can be separated with higher separation accuracy forming boundary surface as shown in Fig. 2, because of coalescence brought about by contact with the fins 7.

The light liquid which has been separated and has passed through the bowl 2 overflows a bank 8 and is discharged through an outlet passage 9 out of the separator. Likewise, the heavy liquid which has been separated and has passed through the bowl 2 overflows a bank 10 and is discharged through an outlet passage 11 of the separator. Thus, the banks 8, 10 serve to control the over-flows of the light and heavy liquids.

FIG. 2 shows at enlarged scale the vane of the screw conveyor 3 and the fins 7. FIG. 2 also shows the manner in which sedimented and swinging particles move between the fins 7.

FIG. 3 shows a screw conveyor 3 and fins 7 ac cording to another embodiment. The vane of the screw conveyor 3 and the fins 7 are inclined at an angle different from the angle at which, i.e., in a direction opposite to the direction in which, the screw conveyor vane and the fins 7 shown in FIG. 2 are inclined.

For another embodiment, it is preferable to arrange fins in the form of a group of thin plates mounted on the screw conveyor shaft parallel thereto and extending radially outwardly from the screw conveyor shaft obliquely to the free liquid surface of the mixture in the rotating bowl 2, and a screw conveyor vane is wound on the outer edges of the thin plates.

Now, comparative Examples 1 and 2 in which con ventional decanters were used to separate a feed mixture, and Inventive Example in which the three-phase separator according to the present invention was used to separate a feed mixture will be described below.

### Comparative Example 1:

1000 l/h of a feed mixture to be separated were produced from sardines by a screw press in a fish meal plant and passed through a rotalry screen. The feed mixture was composed of 30.8 vol.% of oil, 61.5 vol.% of water, and 7.7 vol.% of solids. The feed mixture was supplied to a conventional singly-canted three-phase separation decanter having a bowl with an inside diameter of 250 mm. The feed mixture was separated under centrifugal forces of 3000 G at 95°C, into a light liquid composed of 2.5 vol.% or less of water, 2.0 vol.% or less of solids, and the remainder of oil, a heavy liquid composed of 98.7 vol.% of water, 1.3 vol.% of solids, and 0.83 wt.% of oil, and a cake composed of about 70 wt.% of water, 3.0 wt.% of oil, and the remainder of solids.

The light liquid was polished by a cone-disk decanter, for sale as fish oil. The heavy liquid was concentrated into a protein concentrate. The cake was dried by a drier.

The water content in the light liquid produced by the conventional three-phase separation decanter was 1.8 wt.% on average, which was a large value. The solids in the light liquid which were sedimented under centrifugal forces were 2.0 vol.%, which was also a large value. The light liquid was not avaialble immediately as a fish oil product. The oil in the heavy liquid was 0.83 wt.% and the solids in the heavy liquid which were sedimented under centrifugal forces were 1.3 vol.%. These values were also large, and the heavy liquid caused blocking of heater pipes when it was concentrated.

The conventional three-phase separation decanter would not be practically usable as a three-phase separator if the feed mixture were processed only once by the three-phase separation decanter. To make the produced light liquid available as a fish oil product, it is necessary to subsequently polish the light liquid with a cone-disk decanter. The produced heavy liquid is responsible for causing trouble with heater pipes when it is concentrated.

### Comparative Example 2:

3000 l/h of a feed mixture to be separated were produced from sardines by a screw press and passed through a rotary screen. The feed mixture was composed of 15.6 to 31.5 vol.% of oil, 3.2 to 12.1 vol.% of solids, and the remainder of water. The feed mixture was supplied to a conventional doubly-canted three-phase separation decanter having a bowl with an inside diameter of 320 mm and a screw conveyor shaft with no fins. The feed mixture was separated under centrifugal forces of 3000 G at 90°C, into a light liquid composed of 0.15 wt.% of water, a trace of solids, and the remainder of oil, a healvy liquid composed of 0.1 to 0.26 wt.% of oil, 0.3 vol.% of solids, and the remainder of water, and a cake composed of 1.8 wt.% of oil, about 65 wt.% of water, and the remainder of solids.

The light liquid was of such good quality that it could immediately be shipped as a fish oil product. The heavy liquid and the cake were processed in the same manner as with Comaprative Example 1. The protein concentrate produced from the heavy liquid did not cause blocking of heater pipes upon concentration, and hence was of better quality than the protein concentrate in Comparative Example 1. The cake was dried more quickly than the cake in the Comparative Example 1.

### Inventive Example:

5100 l/h of the feed mixture used in Comparative Example 2 was supplied to the three-phase separator according to the present invention. The three-phase separator used had a bowl with an inside diameter of 320 mm and a screw conveyor including six fins with distal ends spaced 20 mm from the inner wall surface of the bowl. The fins had a height of 70 mm on the screw conveyor shaft, were inclined at an angle of 45° as shown in FIG. 2, and disposed at equally spaced intervals between turns of the screw conveyor vane which were spaced 60 mm from each other. The feed mixture was separated under centrifugal forces of 3000 G at 93°C, into a light liquid composed of 0.12 wt.% of water, a trace of solids, and the remainder of oil, a heavy liquid composed of 0.1 to 0.2 wt.% of oil, 0.3 vol.% of solids, and the remainder of water, and a cake composed of 1.8 wt.% of oil, about 65 wt.% of water, and the remainder of solids.

The light liquid was of such good quality that it could immediately be shipped as a fish oil product. The heavy liquid and the cake were processed in the same manner as with Comparative Example 2. The protein concentrate produced from the heavy liquid was as good as the protein concentrate in Comparative Example 2. The cake was dried more quickly than the cake in the Comparative example 2.

The three-phase separator used in Inventive Example had major dimensions which were essentially the same as those of the doubly-canted three-phase separation decanter used in Comparative Example 2. Because of the fins provided in the screw conveyor, however, the processing capacity of the three-phase separator in Inventive example was 1.7 times that of the doubly-canted three-phase separation decanter in Comparative Exampel 2 (5100 l/h versus 3000 l/h), and the fish oil as the light liquid and a dilute aqueous solution of the protein concentrate as the heavy liquid had higher purity than those of Comparative Example 2 (the water in the light liquid: 0.12 wt.% versus 0.15 wt.%, and the oil in the heavy liquid: 0.1 to 0.2 wt.% versus 0.1 to 0.26 wt.%).

It was speculated that the presence of the fins 7 would adversely affect the stability of the dynamic interfacial boundary between the light and heavy liquids. However, the experimental results of Inventive and Comparative Examples indicated above show that the improved qualities of the separated light and heavy liquids proved the existence of a stable dynamic interfacial boundary between the light and heavy liquids.

Although certain preferred embodiments of the present invention have been shown and described in detail, it should be understood that various changes and modifications may be made therein without departing from the scope of the appended claims.

## Claims

1. A sedimentation centrifuge comprising:
a hollow cylindrical body (2) rotatable about its own central axis;
supply means (1) for supplying a solid-liquid mixture into said hollow cylindrical body (2),
a first hollow frustoconical section having an inner wall surface inclined at a larger angle to said central axis, said first hollow frustoconical section having a larger-diameter open end contiguously joined to one end of said hollow cylindrical body, and a smaller-diameter open end axially opposite to said larger-diameter open end;
a second hollow frustoconical section having an inner wall surface inclined at a smaller angle to said central axis, said second hollow frustoconical section having one open end contiguously joined to said smaller-diameter open end of the first hollow frustoconical section and an opposite open end defining a discharge hole (4), said one open end being positioned at the same level as or below the free surface of the solid-liquid mixture which is of a cylindrical shape in said hollow cylindrical body (2) while the hollow cylindrical body is rotating;
a screw conveyor (3) disposed in said hollow cylindrical body (2) and said first and second hollow frustoconical sections for transferring sedimented solids separated from said solid-liquid mixture in said hollow cylindrical body through said first and second hollow frustoconical sections to said discharge hole (4),
bank means (8, 10) on an end of said hollow cylindrical body (2) remote from said discharge hole (4) for controlling an overflow of liquids separated from said solid-liquid mixture, and
discharge means (9, 11) for discharging said overflow of liquids, characterized in that
at least one fin (7) is mounted on said screw conveyor (3) and is disposed in spaces between turns of the vane of said screw conveyor, said fin (7) being inclined with respect to said central axis.

2. A sedimentation centrifuge according to claim 1, wherein
a first bank (10) is provided on an end of said hollow cylindrical body (2) remote from said discharge hole (4) for controlling an overflow of a heavy liquid separated from said solid-liquid mixture, and
a second bank (8) is provided on an end of said hollow cylindrical body (2) remote from said discharge hole (4) for controlling an overflow of a light liquid separated from said solid-liquid mixture.

3. A sedimentation centrifuge according to claim 1, wherein the vane of the screw conveyor (3) is inclined at the same angle as the fin (7).

## Patentansprüche

1. Sedimentationszentrifuge mit:
einem um seine eigene Zentralachse drehbaren, hohlen, zylindrischen Körper (2),
einer Zuführungseinrichtung (1) zum Zuführen einer Feststoff/Flüssigkeits-Mischung in den hohlen, zylindrischen Körper (2),
einem ersten hohlen, kegelstumpfförmigen Abschnitt mit einer Innenwandfläche, die unter einem größeren Winkel gegenüber der Zentralachse geneigt ist, wobei der erste hohle, kegelstumpfförmige Abschnitt ein offenes Ende größeren Durchmessers, das mit dem einen Ende des hohlen, zylindrischen Körpers angrenzend verbunden ist, und ein offenes Ende kleineren Durchmessers aufweist, das dem offenen Ende größeren Durchmessers axial gegenüberliegt,
einem zweiten hohlen, kegelstumpfförmigen Abschnitt mit einer Innenwandfläche, die unter einem kleineren Winkel gegenüber der Zentralachse geneigt ist, wobei der zweite hohle, kegelstumpfförmige Abschnitt ein offenes Ende, das mit dem offenen Ende kleineren Durchmessers des ersten hohlen, kegelstumpfförmigen Abschnitts angrenzend verbunden ist, und ein gegenüberliegendes offenes Ende aufweist, das eine Abführungsöffnung (4) bildet, wobei das eine offene Ende in derselben Höhe wie die freie Oberfläche der Feststoff/Flüssigkeits-Mischung oder unterhalb derselben angeordnet ist, die eine zylindrische Gestalt in dem hohlen zylindrischen Körper (2) aufweist, wenn sich der hohle, zylindrische Körper dreht,
einem Schneckenförderer (3), der in dem hohlen, zylindrischen Körper (2) und dem ersten und dem zweiten hohlen, kegelstumpfförmigen Abschnitt angeordnet ist, zur Weiterleitung von sedimentierten Feststoffen, die aus der Feststoff/Flüssigkeits-Mischung in dem hohlen, zylindrischen Körper abgeschieden worden sind, durch den ersten und den zweiten hohlen, kegelstumpfförmigen Abschnitt zu der Abführungsten hohlen, kegelstumpfförmigen Abschnitt zu der Abführungsöffnung (4) hin,
eine Staueinrichtung (8, 10) an einem von der Abführungsöffnung (4) abgelegenen Ende des hohlen, zylindrischen Körpers (2) zur Steuerung eines Überlaufens von aus der Feststoff/Flüssigkeits-Mischung abgeschiedenen Flüssigkeiten und einer Abführungseinrichtung (9, 11) zum Abführen des Überlaufens der Flüssigkeiten, **dadurch gekennzeichnet**, daß mindestens eine Rippe (7) am Schneckenförderer (3) angebracht und in Räumen zwischen den Gängen des Flügels des Schneckenförderers angeordnet ist, wobei die Rippe (7) gegenüber der Zentralachse geneigt ist.

2. Sedimentationszentrifuge nach Anspruch 1, wobei
eine erste Staueinrichtung (10) an einem von der Abführungsöffnung (4) abgelegenen Ende des hohlen, zylindrischen Körpers (2) zur Steuerung eines Überlaufens einer aus der Feststoff/Flüssigkeitsmischung abgeschiedenen schweren Flüssigkeit vorgesehen ist und
eine zweite Staueinrichtung (8) an einem von der Abführungsöffnung (4) abgelegenen Ende des hohlen, zylindrischen Körpers (2) zur Steuerung eines Überlaufens einer aus der Feststoff/Flüssigkeits-Mischung abgeschiedenen leichten Flüssigkeit vorgesehen ist.

3. Sedimentationszentrifuge nach Anspruch 1, wobei der Flügel des Schneckenförderers (3) unter dem gleichen Winkel wie die Rippe (7) geneigt ist.

## Revendications

1. Centrifugeuse à sédimentation comprenant:
un corps cylindrique creux (2) rotatif autour de son propre axe central;
des moyens d'alimentation (1) destinés à alimenter un mélange solide-liquide dans le corps cylindrique creux (2);
une première section tronconique creuse ayant une surface de paroi interne inclinée selon un plus grand angle par rapport à l'axe central, cette première section tronconique creuse ayant une extrémité ouverte de plus grand diamètre assemblée de façon contiguë à une extrémité du corps cylindrique creux, et une extrémité ouverte de plus petit diamètre axialement opposée à cette extrémité ouverte de plus grand diamètre;
une seconde section tronconique creuse ayant une surface de paroi interne inclinée selon un plus petit angle par rapport à l'axe central, cette seconde section tronconique creuse ayant une extrémité ouverte assemblée de façon contiguë sur l'extrémité ouverte de plus petit diamètre de la première section tronconique creuse, une extrémité ouverte opposée définissant un trou de décharge (4), cette extrémité ouverte étant positionnée au même niveau ou au-dessous de la surface libre du mélange solide-liquide qui est de forme cylindrique dans le corps cylindrique creux (2) tandis que le corps cylindrique creux est en rotation;
un convoyeur à vis sans fin (3) disposé dans le corps cylindrique creux (2) et les première et seconde sections tronconiques creuses pour transférer des matières solides sédimentées séparées du mélange solide-liquide dans le corps cylindrique creux par les première et seconde sections tronconiques creuses vers le trou de décharge (4);
des gradins (8,10) sur une extrémité du corps cylindrique creux éloigné du trou de décharge (4) pour commander le trop-plein du liquide séparé du mélange solide-liquide, et
des moyens de décharge (9,11) pour décharger le trop- plein de liquide;
caractérisée en ce
qu'au moins une ailette (7) est montée sur le convoyeur à vis sans fin (3) et disposée dans les espaces entre les spires de la pale du convoyeur à vis sans fin, cette ailette (7) étant inclinée par rapport à l'axe central.

2. Centrifigeuse à sédimentation selon la revendication 1, dans laquelle un premier gradin (10) est prévu sur une extrémité du corps cylindrique creux (2) éloigné du trou de décharge (4) pour commander un trop-plein de liquide lourd séparé du mélange solide-liquide;
un second gradin (8) est prévu sur une extrémité du corps cylindrique creux (2) éloigné du trou de décharge (4) pour commander un trop-plein d'un liquide léger séparé du mélange solid-liquide.

3. Centrifigeuse à sédimentation selon la revendication 1, dans laquelle la pale du convoyeur à vis sans fin (3) est incliné sur le même angle que l'ailette (7).
